(19) Europäisches Patentamt
European Patent Office
Office européen des brevets

(11) Veröffentlichungsnummer: **0 004 851**
**B1**

(12) **EUROPÄISCHE PATENTSCHRIFT**

(45) Veröffentlichungstag der Patentschrift: **13.07.83**

(51) Int. Cl.³: **C 08 F 20/12**, C 08 F 12/08

(21) Anmeldenummer: **79100230.6**

(22) Anmeldetag: **26.01.79**

(54) **Verfahren zur teilweisen Polymerisation von Vinylmonomeren und Verwendung des erhaltenen Polymerisatsirups.**

(30) Priorität: **22.04.78 DE 2817754**

(43) Veröffentlichungstag der Anmeldung:
**31.10.79 Patentblatt 79/22**

(45) Bekanntmachung des Hinweises auf die Patenterteilung:
**13.07.83 Patentblatt 83/28**

(84) Benannte Vertragsstaaten:
**FR GB IT NL SE**

(56) Entgegenhaltungen:
**DE - A - 1 520 234**
**DE - A - 2 704 768**
**DE - B - 1 083 057**
**DE - B - 1 175 439**

(73) Patentinhaber: **Röhm GmbH**
**Kirschenallee Postfach 4242**
**D-6100 Darmstadt 1 (DE)**

(72) Erfinder: **Bürgle, Peter, Dr.**
**Spessartring 65**
**D-6100 Darmstadt (DE)**
Erfinder: **Maurer, Karl**
**Raidelbacher Strasse 26**
**D-6147 Lautertal 2 (DE)**
Erfinder: **Munzer, Manfred Dr.**
**Hunsrückstrasse 15**
**D-6140 Bensheim (DE)**
Erfinder: **Rosskopp, Wilhelm**
**Riedlingerstrasse 39**
**D-6100 Darmstadt (DE)**
Erfinder: **Wenzel, Franz Dr.**
**Zeyherweg 5**
**D-6100 Darmstadt (DE)**

**EP 0 004 851 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur teilweisen Polymerisation von Vinylmonomeren und Verwendung des erhaltenen Polymerisatsirups

Die Erfindung betrifft das in den Patentansprüchen angegebene Verfahren zur teilweisen Polymerisation von Vinylmonomeren durch Auslösung der Polymerisation mittels eines organischen Peroxids und Abbruch mittels eines Polymerisationsinhibitors sowie die Verwendung der teilweise polymerisierten Vinylmonomeren bei der Herstellung von organischem Glas.

Die teilweise Polymerisation von Vinylmonomeren hat technische Bedeutung für die Herstellung von unter Polymerisation härtbaren flüssigen Harzen. Gegenüber reinen Vinylmonomeren polymerisieren Gemische, die neben unpolymerisierten Vinylmonomeren dessen Polymerisat enthalten, unter geringerer Wärmeentwicklung, zum Teil auch in wesentlich kürzerer Zeit. Die teilweise polymerisierten Monomeren, die in lösungsmittelfreier Form als polymerisatsirupe bezeichnet werden, können beispielsweise als Überzugsmittel oder als Bindemittel für körnige oder fasrige Materialien dienen. Eine bevorzugte Verwendung finden sie bei der Herstellung von organischem Glas, wobei sie in Form einer Schicht zu harten Kunststoffplatten auspolymerisiert werden.

Polymerisatsirupe oder vergleichbare Gemische, die unpolymerisierte Vinylmonomere und dessen Polymerisat nebeneinander enthalten, werden am wirtschaftlichsten durch teilweise Polymerisation eines Vinylmonomeren hergestellt. Es sind verschiedene Verfahren entwickelt worden, um die Polymerisation beim gewünschten Umsatz anzuhalten. Diese Verfahren lassen die erwünschten Eigenschaften von Polymerisatssirupen nicht in befriedigender Weise erreichen. In der Regel sollen Polymerisatsirupe einen möglichst hohen Polymerisatgehalt aber gleichzeitig eine möglichst neidrige Viskosität aufweisen. Sie sollen weiterhin durch übliche Initiatoren härtbar sein und die Herstellung hochmolekularer Polymerisate zulassen.

Aus der DT—AS 1 083 057 ist die Herstellung eines Polymerisatsirups mit einer Viskosität von 0,5—50 Poise (50—5000 mPa.s) bekannt, der etwa 35 % Polymethylmethacrylat in gelöster Form, sowie nicht mehr als 20 ppm eines Polymerisationsinitiators und eine Stabilisierungsmittel enthält. Eine solcher Sirup ist bei Raumtemperatur hinreichend stabil gegen weitere Polymerisation, um ihn im industriellen Maßstab handhaben und zur Herstellung von gegossenen Acrylglasscheiben oder anderen Polymerisationsprodukten verwenden zu können. Die Forderung nach einem hohen Polymerisatgehalt und einer niedrigen Viskosität kann nur durch ein verhaltnismäßig niedriges Molekulargewicht des gelösten Polymerisats erfüllt werden. Die Polymerisate in den bekannten Sirupen haben eine innere Viksosität von 0,25 bis 1,0, was (nach Makromol. Chemie, 1952, VII/3, Seite 294) einem Molekulargewicht zwischen etwa 40.000 und 250.000 entspricht. Molekulargewichte in diesem Bereich werden durch Polymerisation in Gegenwart von Kettenübertragungsmitteln, besonders Merkaptanen, gebildet. Ihre Anwesenheit in dem Sirup bewirkt, daß auch bei seiner Weiterverarbeitung ein Polymerisat von verhältnismäßig niedrigem Molekulargewicht entsteht. Für die anwendungstechnischen Eigenschaften des Polymerisats ist dagegen ein hohes Molekulargewicht vorteilhaft.

Gemäß der DT—OS 27 04 768 erhält man Polymerisatsirupe durch Polymerisation von Methylmethacrylat in Gegenwart von Azo-Initiatoren und Thiodicarbonsäurediestern. Zum Abbruch der Polymerisation muß in sehr kurzer Zeit unter die Zerfallstemperatur des Initiators abgekühlt werden, was im technischen Maßstab im allgemeinen nicht möglich ist.

Polymerisate von diedrigem Molekulargewicht lassen sich bekanntlich auch in Abwesenheit von Reglern durch Polymerisation unter einem hohen Radikalstrom erzeugen. Es gelingt jedoch mit den in der Polymerisationstechnik gebräuchlichen Initiatoren nicht, den hohen Radikalstrom beim Erreichen des er wünschten Umsatzes abrupt abzubrechen. Die starke Wärmeentwicklung bei der Polymerisation macht eine plötzliche Abkühlung von außen unmöglich. Verwendet man dagegen einen Initiator, der sich bis zum Erreichen des erwünschten Vorpolymerisationsumsatzes vollständig verbraucht, so klingt der Radikalstrom in dieser Zeitspanne allmählich ab und erzeugt gegen Ende der Vorpolymerisation sehr hochmolekulares Polymerisat, das die Viskosität des Sirups in unerwünschter Weise erhöht.

Dieser Nachteil besteht z.B. bei dem Verfahren gemäß der DT—AS 1 245 128. Man setzt einem polymerisierenden Gemisch laufend kleine Mengen eines Initiators zu, der bei der herrschenden Polymerisationstemperatur praktisch spontan zerfällt. In der praktischen Anwendung dieses Verfahrens ist man allerdings auf die Verwendung von Initiatoren angewiesen, deren Halbwertzeit unter Polymerisationsbedingungen eine Größenordnung von etwa einer Minute nicht wesentlich unterschreitet. Bis zum vollständigen Verbrauch des zuletzt zugesetzten Initiators vergehen noch mehrere Minuten, in denen Polymerisat gebildet wird, dessen Molekulargewicht in dem Maße zunimmt, wie der Radikalstrom allmählich abklingt. Polymerisatsirupe von der erwünschten niedrigen Viskosität lassen sich daher nach diesem Verfahren ohne die Mitverwendung von Reglern nicht herstellen.

Dem Abbruch einer mit einem hohen Radikalstrom ablaufenden Polymerisation ohne die nachteilige Auswirkung einer Abklingphase durch Zusatz von Polymerisationsinhibitoren

sind Grenzen gesetzt. Es gelingt zwar in manchen Fällen, die Polymerisation durch Zusatz von Inhibitoren, wie Hydrochinon, Brenzkatechin oder Phenolen, bei gleichzeitiger äußerer Kühlung und durch Zusatz von kaltem Monomerem abzustoppen (DT—AS 1 175 439). Das Verfahren ist jedoch nur bei einer begrenzten Ansatzgröße und ausreichender Kühlfläche sowie mit einem mäßigen Radikalstrom durchführbar, was wiederum die Mitverwendung von Reglern notwendig macht. Würde man bei hohem Radikalstrom ohne Regler arbeiten, so wäre eine so große Menge des Inhibitors nötig, daß die spätere Aushärtung des Sirups durch radikallische Polymerisation nicht mehr möglich wäre.

Aus der DT—AS 1 645 203 ist die teilweise Polymerisation von Vinylmonomeren in großen Ansätzen ohne Mitverwendung von Reglern bekannt. Der Abbruch erfolgt bei diesem Verfahren durch Einblasen von Sauerstoff und gleichzeitige Abkühlung. In der Abbruchphase werden erhebliche Mengen eines polymeren Peroxids gebildet, das sich bei den Temperaturen, bei denen die aus den Sirupen erzeugten Kunststoffe üblicherweise verarbeitet werden, zersetzt. Es kommt dabei in Beträchtlichem Ausmaß zu Depolymerisation und anderen unkontrollierten Zersetzungserscheinungen, die eine Verfärbung des Polymerisats oder verschlechterte mechanische Eigenschaften nach sich ziehen können.

Der Erfindung liegt die Aufgabe zugrunde, Vinylmonomere teilweise zu polymerisieren und die Polymerisation ohne rasche äußere Abkühlung in der Weise abzubrechen, daß während der Abbruchphase kein unerwünschter Viskositätsanstieg auftritt und das teilpolymerisierte Gemisch durch radikalische Polymerisation zu Polymerisaten von hohem Molekulargewicht und guten mechanischen und thermischen Eigenschaften ausgehärtet werden kann.

Die Lösung der gestellten Aufgabe durch das in den Ansprüchen gekennzeichnete Verfahren beruht auf einer spezifischen Reaktion zwischen dem als Polymerisationsinitiator eingesetzten Perkohlensäureester und einem Thioäther, organischem Disulfid oder Merkaptan. Aus einer Veröffentlichung von L. Horner und E. Jürgens (Liebigs Annalen der Chemie, Bd. 602 (1956) Seite 135) ist es bekannt, daß Diacylperoxide mit Thioäthern zu den entsprechenden Sulfoxyden einerseites und acylierten Thioäthern andererseits reagieren. Da diese Umsetzung schon bei mäßigen Temperaturen eintritt, erschien sie zunächst geeignet, Diacylperoxide in einem polymerisierenden Gemisch mit dem Ziel des Abbruchs der Polymerisation zu zersetzen. Unter Verwendung des von Horner und Jürgens verwendeten Dibenzoylperoxids und anderer gebräuchlicher Peroxidinitiatoren erwies sich jedoch die Auslösung der radikalischen Polymerisation als die gegenüber der Umsetzung mit Thioäthern bevorzugte Reaktion; die radikalische Polymerisation läuft in Gegenwart von Thioäthern praktisch ungestört ab. Überraschenderweise trifft dies für Perkohlensäureester nicht zu. Ihre Reaktion mit Thioäthern, organischen Disulfiden und Merkaptanen verläuft unter Zerfallsbedingungen in der Weise, daß es nicht mehr zu Auslösung der radikalischen Polymerisation kommt. Eine durch Perkohlensäureester initiierte Polymerisation läßt sich daher durch den Zusatz der genannten Schwefelverbindungen spontan abbrechen, nach Zusatz anderer radikalbildender Initiatoren aber jederzeit ungestört forsetzen.

Das Verfahren der Erfindung dient in erster Linie der Herstellung von Polymerisatsirupen durch teilweise Polymerisation von Vinylmonomeren in Substanz, d.h. ohne Zusatz von nicht polymerisierbaren Lösungs- oder Verdünnungsmitteln. Das Verfahren ist jedoch auch mit anderen Gemischen durchführbar, bei denen sich der Perkohlensäureester in einer homogenen flüssigen Phase befindet und dort mit der zugesetzten Schwefelverbindung spontan reagieren kann. In Gegenwart von Flüssigkeiten, die sowohl das Vinylmonomere als auch Perkohlensäureester und die zum Abbruch verwendete Schwefelverbindung zu lösen vermögen, können Lösungs- oder Fällungspolymerisationen durchgeführt und beim erwünschten Umsatz abgebrochen werden.

Vorzugsweise erfolgt der Abbruch nach einem Umsatz des Vinylmonomeren von wenigstens 20 Gew.-% Die Viskosität eines erfindungsgemäß erzeugten Polymerisatsirups liegt vorzugsweise nicht über 100 sec., gemessen bei 20°C im 6 mm-Becher gemäß DIN 53211. Das mittlere Molekulargewicht der Polymerisate in den bevorzugten Sirupen liegt unter der Grenze von $M_w = 500.000$, insbesondere im Bereich von 200.000 bis 300.000. Damit das durchschnittliche Molekulargewicht bzw. die Viskosität des Sirups unterhalb der gewünschten Grenzen bleiben, wird für den Abbruch ein Zeitpunkt gewählt, an dem der Radikalstrom noch hoch und die Initiatorkonzentration noch nicht weiter als auf etwa die Hälfte bis ein Viertel der ursprünglichen oder durch spätere Initiatorzufuhr aufrechterhaltenen Konzentration abgesunken ist.

Nach dem Verfahren der Erfindung können alle durch organische Peroxide polymerisierbaren Vinylmonomeren und ihre Gemische teilweise polymerisiert werden. Das polymerisierende Gemisch soll wenigstens unter den Reaktionsbedingungen bis zum Abbruch der Polymerisation eine flüssige Phase bilden. Als Vinylmonomere kommen z.B. Acryl- und Methacrylsäureester, die Nitrile und Amide dieser Säuren, Styrol, Vinyltoluol, Vinylester aliphatischer Carbonsäuren und Vinylidenchlorid in Betracht. Vorzugsweise dient das Verfahren zur Polymerisation von Methylmethacrylat oder eines zu mindestens 80 Gew.-% aus Methylmethacrylat und zum übrigen Teil aus anderen, damit mischpolymerisierbaren Monomeren bestehenden Gemisches, insbesondere der Herstellung lösungsmittelfreier Polymerisatsirupe auf dieser Basis.

Als Perkohlensäureester werden vorzugsweise Verbindungen der Formel

RO—CO—O—O—CO—OR

worin R ein geradkettiger, verzweigter oder cyclischer aliphatischer Rest mit 2 bis 20 C-Atomen ist, eingesetzt. Beispiele für derartige Peroxiddicarbonate sind Diisopropyl-, Di-n-butyl-, Di-(2-äthyl-hexyl)-, Dicyclohexyl-, Di (4-tert.-butyl-cyclohexyl)-, Di-cetyl-, Di-myristyl- und Di-isotridecyl-peroxydicarbonat, die alle als Handelsprodukte erhältlich sind. Sie haben eine Halbwertzeit von etwa einer Stunde bei 56°C. Wenn über die Initiatormenge das Molekulargewicht des entstehenden Polymerisats gesteuert werden soll, so wird die erforderliche Menge in einem Vorversuch ermittelt, indem man z.B. durch Eingießen eines Probeansatzes in eine kalte Inhibitorlösung die Polymerisation abbricht und das Molekulargewicht des Polymerisatanteils (bzw. seine innere Viskosität) nach bekannten Methoden ermittelt. Einen gewissen Einfluß auf den Polymerisationsablauf üben allerdings die Ansatzgröße, die Kühlkapazität und andere Eingenschaften der technischen Polyermisationsapparatur aus, so daß bei der Übertragung vom Laboransatz in den technischen Maßstab kleine Korrekturen der Initiatormenge nötig werden können. In der Regel liegt der Initiatorbedarf bei 0,05 bis 1 Gew.-%, bezogen auf die Monomeren.

Die Polymerisation wird in der Regel ansatzweise in einem Rührkessel mit Heiz- und Kühlvorrichtung durchgeführt. Man kann das Vinylmonomere bzw. das Gemisch von Vinylmonomeren, gegebenenfalls zusätzlich mit einem Gehalt an Lösungs- oder Verdünnungsmitteln zusammen mit dem Initiator in dem Reaktionsgefaß vorlegen und die Polymerisation durch Erwärmen auf 40 bis 80°C in Gang setzen. In der Regel reicht die Kühlkapazität nicht aus, um die Temperatur im Kessel konstant zu halten. Daher steigt die Temperatur im Laufe der Vorpolymerisations auf 90 bis 95°C an. Die steigende Temperatur kompensiert die Abnahme der Initiatorkonzentration, so daß der Radikalstrom während der Vorpolymerisation kaum absinkt, sondern eher noch ansteigt.

Bei der bevorzugten Arbeitsweise wird das initiatorhaltige Vinylmonomere aus einem Vorratsgefäß während der Polymerisation allmählich in das Reaktionsgefäß einfließen gelassen. Dadurch, daß man das Monomere kalt zulaufen läßt und das Reaktionsgefäß gleichzeitig von außen kühlt, kann die Polymerisationstemperatur auch bei Ansätzen im technischen Maßstab unterhalb von 100°C gehalten werden, so daß beispielsweise Methylmethacrylat nicht zum Sieden kommt. Sobald der gewünschte Umsatz erreicht ist, wird die Polymerisation durch Zusatz eines Thioäthers, eines organischen Disulfids oder Merkaptans abgebrochen. Die Verteilung des Abbruchmittels wird erleichtert, wenn es vermischt mit einem Teil des Vinylmonomeren zugegeben wird.

Die erfindungsgemäß als Abbruchmittel verwendeten Schwefelverbindungen sind untereinander nicht völlig gleichwertig. Sie unterscheiden sich durch ihre Einwirkung auf den Ablauf der Polymerisation bei der Weiterverarbeitung des Polymerisatsirups. Merkaptane haben bekanntlich eine starke Reglerwirkung, d.h. sie setzen das Molekulargewicht des in ihrer Gegenwart entstehenden Polymerisats herab. Disulfide haben eine wesentlich geringere, Thioäther praktisch gar keine Reglerwirkung. Da im allgemeinen hohe Molekulargewichte angestrebt werden, werden Disulfide und Thioäther bevorzugt, die letzteren besonders bevorzugt eingesetzt. Der im ausgehärteten Endprodukt verbleibenden Rest der Schwefelverbindung hat eine deutliche thermostabilisierende Wirkung, die sich sowohl bei der thermoplastischen Verarbeitung von Formmassen als auch bei der Thermoformung von Platten, Rohren und dergl. vorteilhaft auswirkt.

Die unerwünschte Reglerwirkung läßt sich dadurch unterdrücken, daß man von der regelnd wirkenden Schwefelverbindung nur soviel einsetzt, wie bei der Abbruchreaktion verbraucht wird, nämlich die dem Gehalt an Peroxydicarbonat zum Zeitpunkt des Abbruchs äquivalente Menge. Sie läßt sich empirisch an einem Vorversuch ermitteln.

Die vorzugsweise verwendeten Thioäther lassen sich durch die Formel

$$R—CH_2—S—CH_2—R'$$

darstellen, worin R und R' gleiche oder verschiedene organische Reste mit 2 bis 30 C-Atomen bedeuten. Die organischen Reste können von aliphatischer, aromatischer oder gemischt-aliphatisch-aromatischer Natur sein und gegebenenfalls Heteroatome und verschiedene funktionelle Gruppen enthalten.

Eine bevorzugte Gruppe von Thioäthern entspricht der Formel

$$R''—X—A—CH_2—S—CH_2—A—X—R''$$

Darin bedeutet A eine niedere Alkylengruppen vorzugsweise eine Methylen- oder Äthylengruppe, R" eine aliphatischen, aromatischen oder araliphatischen Rest mit bis zu 20 C-Atomen, und X die Estergruppe —CO—O—, wobei das bifunktionelle Sauerstoffatom entweder an A oder an R" gebunden sein kann. Als Beispiele seien Thio-bis-propionsäuremethylester oder -laurylester, Thio-bis-isobuttersäuremethylester und Di-(3,5-di-tert.-butyl-4-hydroxyphenyl-propionyloxyäthyl)-sulfid genannt.

Geeignete Disulfide sind z.B. die der allgemeinen Formel

$$R—CH_2—S—S—CH_2—R'$$

worin R und R' die gleiche Bedeutung wie oben haben können. Vorzugsweise sind R und R' aliphatische Reste mit 1 bis 20 C-Atomen. Man kann z.B. Diäthyldisulfid, Dibutyldisulfid, Dicyclohexyldisulfid, Dioctylsulfid oder Di-tert.-dodecyl-disulfid einsetzen.

Als Merkaptane eignen Sich die als Regler gebräuchlichen Verbindungen, wie n-Dodecylmerkaptan, tert.-Dodecylmerkaptan, Thioglykolsäureester von ein- oder mehrwertigen Alkoholen mit 1 bis 20 C-Atomen, wie z.B. die Methyl-, Butyl-, Octyl-, Äthylenglykol- oder Pentaerthrit-ester, oder Pentaerythrit-tetra-ε-merkaptocapronsäureester.

In der Regel wird schon während der Vorpolymerisation von außen gekühlt. Wenn nicht, sollte spätestens nach Zusatz des Abbruchmittels damit begonnen werden, um das teilpolymerisierte Monomere bis zu seiner Weiterverwendung bei einer Temperatur unter 25°C vor unerwünschter Weiterpolymerisation zu bewahren. Je neidriger die Temperatur ist, um so länger kann das Gemisch ohne Polymerisationsgefahr aufbewahrt werden.

Das teilpolymerisierte Material kann in an sich bekannter Weise mit gebräuchlichen Initiatoren, wie z.B. Dibenzoylperoxid oder Azo-bisisobutyronnitril, bei den dafür üblichen Polymerisationstemperaturen ausgehärtet werden. Bei der Verwendung als Beschichtungsmittel kann es auch durch eine geeignete aktivierende Strahlung ausgehärtet werden. Aus Überzugsmischungen, die nicht polymerisierbare Lösungsmittel enthalten, können diese während der Aushärtung verflüchtigt werden.

Vorzugsweise werden die teilpolymerisierten Gemische in Form eines Polymerisatsirups für die Herstellung organischer Gläser verwendet, indem der Sirup in Form einer Schicht zu einer Platte ausgehärtet wird. Von besonderer Bedeutung ist die Herstellung von Acrylglas. Der vorteilhafte Einfluß eines Überschusses an dem als Abbruchmittel verwendeten Thioäther zeigt sich an der Vicat-Erweichungs-Temperatur. Sie liegt nach Abschluß der Endgültigen Aushärtung bei 112°C und sinkt nach halbstündiger thermischer Belastung bei 160°C nur um 7° auf 105°C. Dagegen sinkt die Vicat-Erweichungs-Temperatur bei einem Vergleichsmaterial ohne Thioäther bei der gleichen thermischen Beanspruchung auf 100°C. Dieser Unterschied ist in vielen Anwendungsfällen bedeutsam.

Beispiel 1

60 Teile eines Gemisches aus 99,8 Gew.-% Methylmethacrylat und 0,2 Gew.-% Isopropylpercarbonat werden in einem Reaktionsgefäß mit Rührer vorgelegt und auf 90°C erhitzt. Innerhlab 15 min werden weitere 40 Teile des gleichen Gemisches gleichmäßig zugegeben, wobei die Temperatur von 90°C aufrechterhalten wird. Unmittelbar danach werden 0,5 Teile Thiodipropionsäure-di-laurylester, gelöst in Methylmethacrylat, zugesetzt, wodurch die Polymerisation sofort zum Stillstand kommt. Anschließend wird aus Raumtemperatur abgekühlt.

Man erhält einen Sirup mit einer Auslaufzeit von 30 sec. im 6 mm-Auslaufbecher nach DIN 53211 (20°C). Der Polymeranteil beträgt etwa 25 Gew.-%, sein Molekulargewicht beträgt $M_w = 250.000$.

Zur Herstellung con Acrylglasplatten wird der Sirup mit 0,05 % Dilaurylperoxid versetzt und zwischen Glasscheiben bei 50°C auspolymerisiert. Am Endprodukt wird ein Molekulargewicht $M_w = 1.000.000$ ermittelt.

Wenn der Thiodipropionsäure-Dilaurylester erst 5 min nach Beendigung des Monomerenzulaufs zugegeben wird, entsteht ein Sirup mit einer Auslaufzeit von 80 sec. (6 mm-DIN-Becher, 20°) bei wenig verändertem Polymergehalt.

Man erhält etwa gleiche Ergebnisse, wenn man anstelle von

0,2 Teilen Diisopropylpercarbonat

jeweils

0,4 Teile Dicyclohexylpercarbonat

oder

0,55 Teile Dicetylpercarbonat einsetzt.

Beispiel 2

Astelle von Methylmethacrylat wird im Verfahren von Beispiel 1 eine Gemisch diese Esters mit Methylacrylat im Gewichtsverhältnis 9:1 eingesetzt. Man ethält einen Sirup mit etwa gleichen Eigenschaften.

Beispiel 3

Das Verfahren gemäß Beispiel 1 wird mit Styrol anstelle von Methylmethacrylat wiederholt. Der erhaltene Sirup stimmt im Polymerisatgehalt, der Auslaufzeit und den Polymerisationseigenschaften mit dem nach Beispiel 1 weitgehend überein.

Beispiel 4

Man verfährt wie bei Beispiel 1, jedoch werden am Schluß der Monomerenzugabe 0,5 Teile Dodecylmerkaptan anstelle des Thioäthers zugesetzt. Die Polymerisation ist nach kurzer Zeit beendet. Man erhält einen Sirup mit 20 bis 25 Gew.-% Polymerisatgehalt und einer Auslaufzeit von 20 sec (6 mm-DIN-Becher, 20°C).

Beispiel 5

Man verfährt wie bei Beispiel 1, jedoch werden am Schluß der Monomerenzugabe 0,5 Teile Diäthyldisulfid anstelle des Thioäthers zugesetzt. Die Polymerisation kommt sofort zum Stillstand. Man erhält einen Sirup von 20—25 Gew.-% Polymerisatgehalt mit einer Auslaufzeit von 40 sec. (6 mm-DIN-Becher, 20°C).

Beispiel 6

Man verfährt wie bei Beilspiel 1, jedoch wird die Polymerisation mit 0,08 Teilen Bis-(2-methoxycarbonylpropyl)-sulfid abgebrochen. Es entsteht ein Sirup mit 24—25 Gew.-% eine Polymerisats mit $M_w = 188.000$.

Beispiel 7

Man verfährt wie bei Beispiel 1, jedoch wird die Polymerisation mit 0,2 Teilen Bis-(2-methoxycarbonyläthyl)-sulfid abgebrochen. Man erhält einen Sirup mit 26 Gew.-% eines Polymerisats mit $M_w = 220.000$.

**Patentansprüche**

1. Verfahren zur teilweisen Polymerisation von Vinylmonomeren durch Auslösen der Polymerisation mittels eines organischen Peroxids und Abbruch mittels eines Polymerisationsinhibitors, dadurch gekennzeichnet, daß man als Peroxid einen Perkohlensäureester und als Polymerisationsinhibitor eine Thioäther, eine organisches Disulfid oder eine Merkaptan einsetzt.

2. Verfahren nach Anspruch 1, dadurch gekennzeichnet, daß das Vinylmonomere in Substanz polymerisiert wird.

3. Verfahren nach den Ansprüchen 1 und 2, dadurch gekennzeichnet, daß die Polymerisation in Abwesenheit von Reglern durchgeführt wird.

4. Verfahren nach den Ansprüchen 1 bis 3, dadurch gekennzeichnet, daß die Menge des Perkohlensäureesters so hoch bemessen wird, daß das entstehende Polymerisat eine mittleres Molekulargewicht $M_w < 500.000$ hat.

5. Verfahren nach den Ansprüchen 1 bis 4, dadurch gekennzeichnet, daß der Abbruch nach einem Umsatz des Vinylmonomeren von wenigstens 20 Gew.-% vorgenommen wird.

6. Verfahren nach den Ansprüchen 2 bis 5, dadurch gekennzeichnet, daß der Abbruch bei einer Viskosität des Gemisches nicht über 100 sec. (6 mm-Becher gemäß DIN 53211), gemessen bei 20°C, erfolgt.

7. Verfahren nach den Ansprüchen 1 bis 6, dadurch gekennzeichnet, daß als Perkohlensäureester eine Verbindung der Formel

$$RO—CO—O—O—CO—OR,$$

worin R ein geradkettiger, verzweigter oder Zyklischer aliphatischer Rest mit 2 bis 20 C-Atomen ist, eingesetzt wird.

8. Verfahren nach den Ansprüchen 1 bis 7, dadurch gekennzeichnet, daß als Thioäther eine Verbindung der Formel

$$R—CH_2—S—CH_2—R'$$

eingesetzt wird, worin R und R' gleiche oder verschiedene organische Reste mit 3 bis 30 C-Atomen sind.

9. Verfahren nach den Ansprüchen 1 bis 8, dadurch gekennzeichnet, daß als Vinylmonomeres Methylmethacrylat oder eine zu mindestens 80 Gew.-% aus Methylmethacrylat und zum übrigen Teil aus anderen, damit mischpolymerisierbaren Monomeren bestehendes Gemisch eingesetzt wird.

10. Verfahren nach den Ansprüchen 1 bis 9, dadurch gekennzeichnet, daß die Polymerisation wenigstens zum überwiegenden Teil bei einer Temperatur von 80 bis 100°C durchgeführt wird.

11. Verfahren nach den Ansprüchen 1 bis 10, dadurch gekennzeichnet, daß im Laufe der Polymerisation kaltes Monomeres zugesetzt wird.

12. Verwendung eines reglerfreien, nach dem Verfahren der Ansprüche 3 bis 11 hergestellten Polymerisatsirups zu Herstellung von organischem Glas.

**Revendications**

1. Procédé pour la polymérisation partielle de monomères vinyliques par déclenchement de la polymérisation au moyen d'un peroxyde organique et arrêt de la réaction au moyen d'un inhibiteur de polymérisation, caractérisé en ce qu'on utilise, en tant que peroxyde, un ester d'acide percarbonique et, en tant qu'inhibiteur de polymérisation, un thioéther, un bisulfure organique ou un mercaptan.

2. Procédé selon la revendication 1, caractérisé en ce que le monomère vinylique est polymérisé dans la masse.

3. Procédé selon l'une quelconque des revendications 1 ou 2, caractérisé en ce que la polymérisation est effectuée en l'absence de régulateurs.

4. Procédé selon l'une quelconque des revendications 1 à 3, caractérisé en ce que la quantité de l'ester d'acide percarbonique est choisie suffisamment élevée pour que le polymère obtenu ait un poids moléculaire moyne $M_w < 500 000$.

5. Procédé selon l'une quelconque des revendications 1 à 4, caractérisé en ce que l'arrêt de la polymérisation est effectué après qu'a été atteint un degré de transformation du monomère vinylique d'au moins 20 % en poids.

6. Procédé selon l'une quelconque des revendications 2 à 5, caractérisé en ce que l'arrêt de la polymérisation est effectué alors que le mélange a une viscosité ne dépassant pas 100 s (bécher de 6 mm suivant la DIN 53 211), mesurées a 20°C.

7. Procédé selon l'une quelconque des revendications 1 à 6, caractérisé en ce qu'on utilise, comme ester d'acide percarbonique, un composé de formule

$$RO—CO—O—O—CO—OR$$

dans laquelle R est une radical en chaîne rectiligne, ramifié ou cyclique contenant 2 à 20 atomes de C.

8. Procédé selon l'une quelconque des revendications 1 à 7, caractérisé en ce qu'on utilise, comme thioéther, un composé de formule

$$R—CH_2—S—CH_2—R'$$

dans laquelle R et R′ sont des radicaux organiques semblables ou différents, contenant 3 à 30 atomes de C.

9. Procédé selon l'une quelconque des revendications 1 à 8, caractérisé en ce qu'on utilise, comme monomère vinylique, le méthacrylate de méthyle ou un mélange composé, pour au moins 80 % en poids, de méthacrylate de méthyle et, pour le reste, d'autres monomères copolymérisables avec celui-ci.

10. Procédé selon l'une quelconque des revendications 1 à 9, caractérisé en ce que la polymérisation est effectuée, au moins en majeure partie, à une temperature de 80 à 100°C.

11. Procédé selon l'une quelconque des revendications 1 à 10, caractérisé en ce que du monomère froid est ajouté au cours de la polymérisation.

12. Utilisation d'un sirop de polymère, préparé suivant le procédé selon l'une quelconque des revendications 3 à 11 et exempt de régulateur, pour la fabrication de verre organique.

## Claims

1. Process for partially polymerising vinyl monomers by initiating polymerisation by means of an organic peroxide and stopping polymerisation by means of a polymerisation inhibitor, characterised in that a percarbonic acid ester is used as the peroxide and a thioether, an organic disulphide or a mercaptan is used as the polymerisation inhibitor.

2. Process as claimed in claim 1, characterised in that the vinyl monomer is mass polymerized.

3. Process as claimed in claim 1 and 2, characterised in that the polymerisation is carried out without any regulators present.

4. Process as claimed in claims 1 to 3, characterised in that the quantity of percarbonic acid ester is such that the polymer formed has an average molecular weight $M_w < 500{,}000$.

5. Process as claimed in claims 1 to 4, characterised in that polymerisation is stopped after a conversion of vinyl monomer of at least 20% by weight.

6. Process as claimed in claims 2 to 5, characterised in that polymerisation is stopped when the mixture has a viscosity of not more than 100 sec. (measured in a 6 mm cup according to DIN 53211), measured at 20°C.

7. Process as claimed in claims 1 to 6, characterised in that a compound of formula

$$RO—CO—O—OCO—OR$$

wherein R is a straight-chained, branched or cyclic aliphatic group with 2 to 20 carbon atoms is used as the percarbonic acid ester.

8. Process as claimed in claims 1 to 7, characterised in that a compound of formula

$$R—CH_2—S—CH_2—R'$$

wherein R and R′ are the same or different organic groups with 3 to 30 carbon atoms is used as the thioether.

9. Process as claimed in claims 1 to 8, characterised in that methyl methacrylate or a mixture consisting of at least 80% by weight of methyl methacrylate, the remainder being other monomers which are copolymerisable therewith, is used as the vinyl monomer.

10. Process as claimed in claims 1 to 9, characterised in that polymerisation is effected, at least predominantly, at a temperature of from 80 to 100°C.

11. Process as claimed in claims 1 to 10, characterised in that cold monomer is added in the course of polymerisation.

12. Use of a polymer syrup free from regulators and prepared according to the process as claimed in claims 3 to 11, for the production of organic glass.